# EUROPEAN PATENT SPECIFICATION

(11) **EP 2 798 579 B1**
(45) Date of publication and mention of the grant of the patent: **06.04.2016**
(21) Application number: 12814030.8
(22) Date of filing: 05.12.2012
(51) Int. Cl.: G06K 17/00, G06K 7/10

(54) **METHOD AND APPARATUS FOR RADIO FREQUENCY IDENTIFICATION (RFID) DATA TRANSMISSION**
VERFAHREN UND VORRICHTUNG ZUR RFID-DATENÜBERTRAGUNG
PROCÉDÉ ET APPAREIL POUR LA TRANSMISSION DE DONNÉES D'IDENTIFICATION PAR RADIOFRÉQUENCE (RFID)

(30) Priority: 29.12.2011 US 201113339442
(43) Date of publication of application: 05.11.2014
(73) Proprietor: Symbol Technologies, Inc., Holtsville, NY 11742 (US)
(72) Inventor: BELLOWS, David E.,, Wantagh, New York 11793 (US); O'HAIRE, Michael,, Smithtown, New York 11787 (US); SUBRAMANIAN, Panchapakesan V.,, Frederick, Maryland 21704 (US)
(74) Representative: Maiwald Patentanwalts GmbH
(86) International application number: PCT/US2012/067972
(87) International publication number: WO 2013/101416

(56) References cited:
- EP-A1- 2 355 368
- US-A1- 2008 238 621

## Description

### RELATED APPLICATIONS

The present application is related to the following United States Patent application commonly owned with this application by Motorola Solutions, Inc.: Serial No. 13/339467, filed December 29, 2011, titled "PORTABLE DATA TAG READER DEVICE, SYSTEM AND METHOD FOR IDENTIFYING A LOCATION OF A DATA TAG", the entire contents of which being incorporated herein by reference.

### FIELD OF THE DISCLOSURE

The present disclosure relates generally to radio frequency identification (RFID) tags, and more particularly to obtaining data of an RFID tag in a virtual read zone of a non-RFID enabled device.

### BACKGROUND

Radio frequency identification (RFID) tags are now widely used to mark, inventory and track various products. RFID tags generally transmit to a reader device a radio frequency (RF) signal that includes product information. RFID tags generally include an integrated circuit for storing and processing information, a transceiver for transmitting and receiving RF signals, and an antenna. Some RFID tags are active RFID tags and include their own battery power source. Passive RFID tags do not have their own power source and require receiving a power signal from the reader device to operate. To interrogate a passive RFID tag, a reader generally transmits a continuous wave (CW) or modulated RF signal to the tag. The tag receives the signal and responds by modulating the signal and then "backscattering" an information response signal to the reader device. The reader device receives the response signal from the tag, and the response signal is demodulated, decoded and further processed.

Handheld RFID reader devices are now commonly used for identifying, cataloging, and locating various types of objects that are tagged with RFID tags. Such objects include relatively large products such as pallets, boxes, containers and big parts or components; and relatively small products such as fasteners, electronic components, and small parts that are stored in bins with large numbers of similar parts.

While RFID tags are commonly used, RFID reader devices are relatively uncommon outside of storage and inventory management applications.

Accordingly, there is a need for an improved method and apparatus for RFID data transmission

US2008/0238621 discloses a RFID system that includes a computer/server and a plurality of RFID readers which are connected to the computer/server.

### BRIEF DESCRIPTION OF THE FIGURES

The accompanying figures, where like reference numerals refer to identical or functionally similar elements throughout the separate views, together with the detailed description below, are incorporated in and form part of the specification, and serve to further illustrate embodiments of concepts that include the claimed invention, and explain various principles and advantages of those embodiments.
FIG. 1 is a block diagram of a system for obtaining data of an RFID tag, according to one embodiment.
FIG. 2 is a block diagram of a fixed RFID module, according to one embodiment.
FIG. 3 is a block diagram of a fixed RFID module, according to another embodiment.
FIG. 4 is a diagram illustrating the generation of virtual read zones, according to one embodiment.
FIG. 5 is a flow diagram illustrating a method of obtaining data of an RFID tag in a virtual read zone of a non-RFID enabled device, according to one embodiment of the present invention.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

The apparatus and method components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

### DETAILED DESCRIPTION

According to some embodiments, a method is provided for obtaining data of an RFID tag in a virtual read zone of a non-RFID enabled device. The method includes determining a location of the non-RFID enabled device, determining a virtual read zone of the non-RFID enabled device and identifying at least one fixed reader device having an RFID read zone that at least partially includes the virtual read zone. The virtual read zone of the non-RFID enabled device is determined using at least the location of the non-RFID enabled device. Data of the RFID tag is then read using the at least one fixed reader device and is transmitted from the at least one fixed reader device to the non-RFID enabled device.

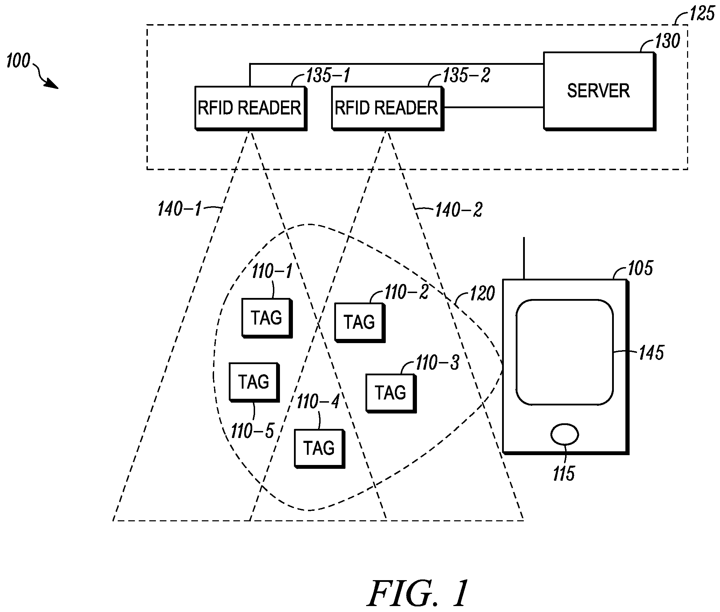

FIG. 1 is a block diagram of a system 100 for obtaining data of an RFID tag, according to one embodiment.

The system 100 includes a non-RFID reader device 105 and a plurality of RFID tags 110-n. The non RFID reader device 105 can comprise a mobile telephone, a mobile computing device, a communications device, for example, or any other suitable communication device.

The non-RFID reader device 105 includes an activation button 115. The activation button 115 is used to activate the obtaining of data of an RFID tag. The activation button can be a physical button, or a virtual button that forms part of a user interface. Further, the non-RFID reader device 105 can have various functions or applications, and the activation button 115 can have multiple purposes. According to certain embodiments, the obtaining of data of an RFID tag is activated by the activation button 115 only when a particular application is open, such as an RFID reader application. The activation button 115 can then be used to activate a number of features such as activating a camera when in a camera application, turning on a light when in a flashlight application, and obtaining of data of an RFID tag when in an RFID reader application.

Alternatively, the non-RFID reader device 105 can include, for example, a finger-trigger mechanism, a keyboard, a graphical user interface (GUI), and/or a voice activated mechanism with which a user of the non-RFID reader device 105 can interact. Alternatively, the obtaining of data of an RFID tag can be activated by the scanning of a bar code or through the capture of an image using a camera of the non-RFID reader device 105.

The non-RFID reader device 105 has a virtual read zone 120. The virtual read zone 120 can, for example, simulate a read zone that the non-RFID reader device 105 could have had if it were an RFID reader device. The read zone of the RFID reader device is the area directly surrounding the RFID reader in which it can read RFID tags. The virtual read zone 120 can be directional, as illustrated in FIG. 1, or omnidirectional. The virtual read zone 120 is determined using the location of the non-RFID reader device 105 and, according to certain embodiments, an orientation of the non-RFID reader device 105. In the case of a virtual read zone 120 that is omnidirectional, the location of the non-RFID reader device 105 alone can be sufficient to determine the virtual read zone 120.

Additionally, the virtual read zone 120 can be determined using further input, such as a virtual interrogation signal strength input, which corresponds to an interrogation signal strength of a corresponding RFID reader device. Increasing the virtual interrogation signal strength increases the size of the virtual read zone, particularly when passive RFID tags are read.

According to one embodiment, the activation button 115 includes a pressure sensor, wherein the virtual interrogation signal strength input is determined based upon a pressure signal of the pressure sensor. Alternatively, the virtual interrogation signal strength input can be determined based upon a duration in which the activation button 115 is activated, through user defined settings, or through any other suitable means.

Alternatively, input may be received by a user input device from a user relating to the size or shape of the virtual read zone. The user input device may comprise a keyboard, a virtual keyboard, or any other suitable user input device. The virtual read zone of the non-RFID enabled device 105 mat then be updated based upon the input from the user.

The location of the non-RFID reader device 105 can be determined, for example, using a Global Positioning System (GPS) module (not shown) built into the non-RFID reader device 105, an ultrasonic identification module (not shown), or through wireless local area network (WLAN) based location technology, for example. The location of the non-RFID reader device 105 need not be determined on a global or absolute level, but instead can be determined relative to another entity in the system 100. For example, the location of the non-RFID reader device 105 can be determined relative to the ultrasonic identification module.

According to certain embodiments, an orientation of the non-RFID reader device 105 is determined and used to generate the virtual read zone 120. The orientation can be determined using a gyroscope, an accelerometer and/or a compass, or any other equivalent device or method.

Alternatively, the location and/or orientation of the non-RFID reader device 105 can be determined using a camera and comparisons with, for example, predetermined images.

The virtual read zone 120 can be determined by the non-RFID reader device 105, or determined externally, such as by the ultrasonic identification module mentioned earlier, an access point or a server.

The present invention is applicable to any type of RFID tag 110-n. Generally, the RFID tag 110-n includes a small radio frequency transmitter and receiver. An RFID reader reader transmits an encoded radio signal to the RFID tag 110-n, to which the tag responds. In the case of RFID tags 110-n that are passive, the RFID tag 110-n uses the radio energy transmitted by the reader as its energy source.

It will be recognized by persons skilled in the relevant art(s) that RFID tags 110-n can include any number of modulators, demodulators, charge pumps, and antennas. The RFID tags 110-n can additionally include further elements, including an impedance matching network and/or other circuitry.

The system 100 further includes a fixed RFID reader module 125. The fixed RFID module 125 comprises a server 130 and a plurality of RFID reader devices 135-n.

The non-RFID reader device 105 transmits details of the virtual read zone 120 to the server 130. The details of the virtual read zone 120 are transmitted to the server 130. The details can include the orientation of the non-RFID reader device 105 and/or the location of the non-RFID reader device 105. Alternatively, the location of the non-RFID reader device 105 can be determined by the server 130, for example through ultrasonic identification.

The server 130 identifies at least one fixed RFID reader device 135-n having an RFID read zone 140-n that at least partially includes the virtual read zone 120. The server 130 then reads data of the RFID tags 110-n using the at least one fixed reader device 135-n.

The server 130 next performs further processing in order to determine if an RFID tag 110-n is inside the virtual read zone 120. For example, the server 130 can activate one or more RFID reader devices 135-n that include RFID read zones 140-n outside of the virtual read zone 120. The server 130 can then determine, based upon the data from the one or more RFID reader devices 135-n that include RFID read zones 140-n outside of the virtual read zone, that an RFID tag 110-n read by the at least one fixed RFID reader device 135-n is not included in the virtual read zone 120.

The data of the RFID tags 110-n is then transmitted to the non-RFID reader device 105. The data transmitted between the server 130 and the non-RFID reader device 105 can advantageously be transmitted wirelessly, for example using a wireless local area network (WLAN) connection (not shown) or mobile wireless technology such as 3rd Generation Partnership Project (3GPP) High Speed Packet Access (HSPA), available at 3gpp.org.

The data of the RFID tags 110-n can then be displayed to the user on a display screen 145, printed, or used as input to an application, for example.

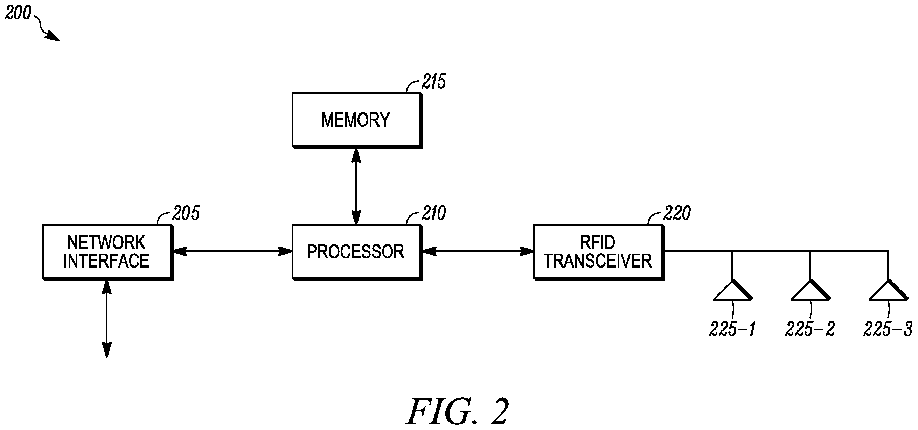

FIG. 2 is a block diagram of a fixed RFID module 200, according to one embodiment. The fixed RFID module 200 can be similar or identical to the fixed RFID reader module 125 of FIG. 1. The fixed RFID module 200 comprises a network interface 205, a processor 210, a memory 215, an RFID transceiver 220 and a plurality of antennas 225-n. Three antennas 225-n are shown, but any number of antennas 225-n could be implemented.

The processor 210 and memory 215 can be replaced by dedicated hardware, and the fixed RFID module 200 can include software, hardware, or firmware, or any combination thereof.

The processor 210 processes computer readable program code components stored in the memory 215 and implements various methods and functions of the fixed RFID module 200 as described herein.

The fixed RFID module 200 can include a system bus (not shown) that couples various system components, including coupling the memory 215 to the processor 205. The system bus can be any of several types of bus structures including a memory bus or memory controller, a peripheral bus, and a local bus using any of a variety of bus architectures.

The structure of system memory 215 is well known to those skilled in the art and can include a basic input/output system (BIOS) stored in a read only memory (ROM) and one or more program modules such as operating systems, application programs and program data stored in random access memory (RAM).

The fixed RFID module 200 can operate in a networked environment using logical connections to one or more remote computers or other devices, such as a server (not shown), a router (not shown), a network personal computer (not shown), a peer device or other common network node (not shown), a wireless telephone (not shown) or wireless personal digital assistant (not shown).

The operation of fixed RFID module 200 can be controlled by a variety of different program modules. Examples of program modules are routines, programs, objects, components, and data structures that perform particular tasks or implement particular abstract data types. Embodiments of the present invention can also be practiced with other computer system configurations, including hand-held devices, multiprocessor systems, microprocessor-based or programmable consumer electronics, network PCs, minicomputers, mainframe computers, personal digital assistants and the like. Furthermore, embodiments of the present invention can also be practiced in distributed computing environments where tasks are performed by remote processing devices that are linked through a communications network. In a distributed computing environment, program modules can be located in both local and remote memory storage devices.

The network interface 205 can be used to facilitate communication between a non-RFID reader device 105 and the processor 210. Also, the network interface 205 can couple the processor 210 to a local area network (LAN). Alternatively, the network interface 205 can couple the processor 210 to a wide area network (WAN), such as the Internet.

According to one embodiment, the network interface 205 includes a web interface (not shown) through which a plurality of components is made available. The components are advantageously Hyper Text Markup Language (HTML) components, and are used to receive and transmit data.

It will be appreciated that the network connections described are exemplary and other ways of establishing a communications link can be used. The existence of any of various well-known protocols, such as TCP/IP, Frame Relay, Ethernet, FTP, HTTP and the like, is presumed, and the fixed RFID module 200 can be operated in a client-server configuration with the non-RFID reader device 105 of FIG. 1.

According to some embodiments, the non-RFID reader device 105 of FIG. 1 requests RFID data from the fixed RFID module 200 via the network interface 205. The request can include the virtual read zone 120 of the non-RFID reader device 105, as discussed above concerning FIG. 1. The RFID transceiver 220 then activates one or more of the plurality of antennas 225-n. The one or more antennas 225-n are then used by the RFID transceiver 220 for communicating with RFID tags 110-n, as described above concerning FIG. 1. The antennas 225-n can be any type of reader antenna known to persons skilled in the relevant art, including, but not limited to, a dipole, loop, Yagi-Uda, slot, or patch antenna type.

The RFID transceiver 220 receives one or more tag responses via the plurality of antennas 225-n. The RFID transceiver 220 outputs a decoded data signal generated from the tag response to the processor 210. The processor 210 optionally processes the data of the decoded data signal prior to being sent via the network interface 205 to the non-RFID reader device 105.

As multiple antennas 225-n are connected to a single RFID transceiver 220, the antennas 225-n are advantageously operated individually, for example in a round-robin type manner. In this case, RFID demodulation can be performed with minimal memory, without queuing and without a need for parallelization.

The network interface 205 enables a wired and/or wireless connection with the non-RFID reader device 105. For example, the network interface 205 can enable a wireless local area network (WLAN) link (including a link according to an Institute of Electrical and Electronics Engineers (IEEE) 802.11 WLAN standard, available at standards.ieee.org), a short distance wireless communication link, and/or other types of wireless communication links. The network interface 205 can be a local area network (LAN), a wide area network (WAN) (e.g. the Internet), and/or a personal area network (PAN).

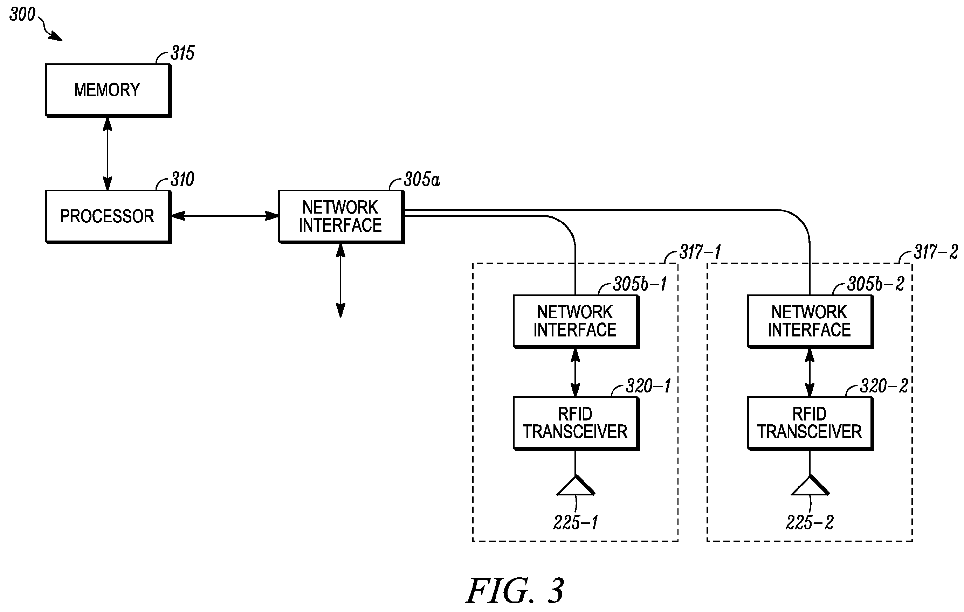

FIG. 3 is a block diagram of a fixed RFID module 300, according to another embodiment of the present disclosure. The fixed RFID module 300 comprises a network interface 305a, a processor 310, a memory 315, and a plurality of external RFID readers 317-n. Each external RFID reader 317-n includes a network interface 305b-n, an RFID transceiver 320-n and an antenna 225-n. The processor 310 communicates with the plurality of external RFID readers 317 via the network interfaces 305a and 305b-n.

The fixed RFID module 300 is similar to the fixed RFID module 200 of FIG. 2. Rather than the processor 210 of FIG. 2 communicating directly with RFID transceiver 220, the processor 310 communicates with RFID transceivers 320-n through network interfaces 305a and 305b-n. The RFID transceiver 320-n is otherwise identical to the RFID transceiver 220 of FIG. 1, the processor 310 otherwise identical to the processor 210 of FIG. 2

The network interface 305a can communicate with the non-RFID reader device 105 of FIG. 1 in the same manner as the network interface 205 of FIG. 2.

The network interface 305a and 305b-n communicate in a similar manner as the network interface 305a and the non-RFID reader device 105.

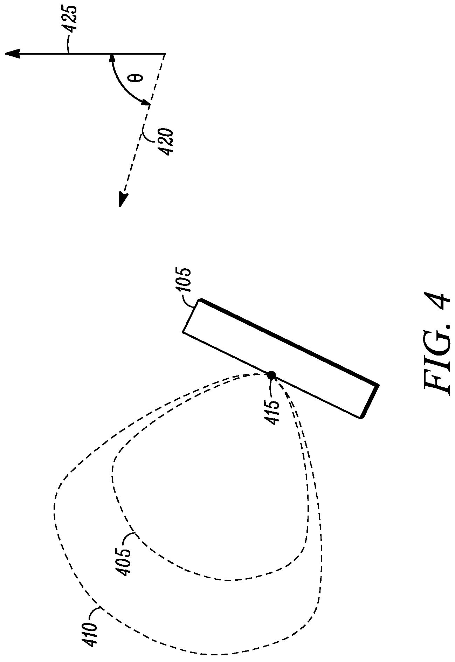

FIG. 4 is a diagram illustrating the generation of virtual read zones, according to one embodiment of the present disclosure. A standard read zone 405 and an extended read zone 410 are illustrated. The extended read zone 410 can be activated based upon a pressure of a trigger, as discussed above, or through any other suitable means. The extended read zone 410 simulates a higher power output of an equivalent RFID enabled device, but any change to the read zone 405 can be performed, such as for example changing the shape or size of the read zone 405.

A location 415 of the device, or a portion thereof, is determined using known location based technology. Examples of known location based technology include GPS and ultrasonic identification, as discussed above.

Next, an orientation of the device is determined. For example, as shown, an angle θ is determined between a reading direction 420 of the non-RFID reader device 105 and a predetermined direction 425. Examples of predetermined directions 425 include the compass direction due North and the gravity vector.

The read zone can then be transmitted to a server through the location 415, the angle θ and the strength or type of read zone.

As will be readily understood by a person skilled in the art, another read zone can be determined using first and second angles, thus enabling a read zone to extend from a non-RFID reader device 105 in any direction.

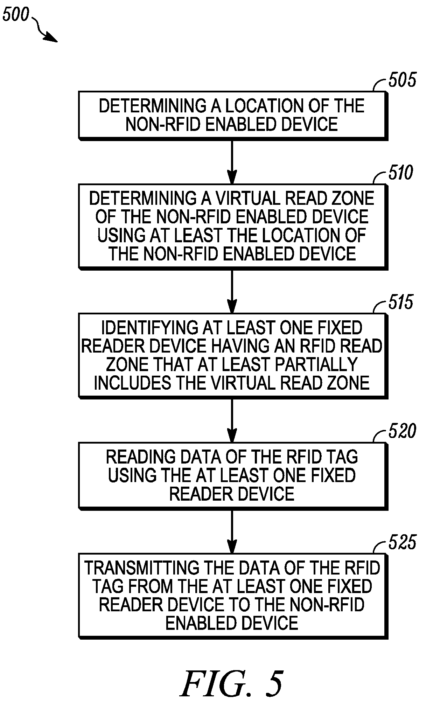

FIG. 5 is a flow diagram illustrating a method 500 of obtaining data of an RFID tag in a virtual read zone of a non-RFID enabled device, according to one embodiment of the present invention.

In 505, a location of the non-RFID enabled device is determined. As discussed above, the location can be determined by the non-RFID enabled device, or by another entity.

In 510 a virtual read zone of the non-RFID enabled device is determined using at least the location of the non-RFID enabled device determined in 505. Exemplary virtual read zones are illustrated in FIG. 4.

In 515 at least one fixed reader device having an RFID read zone that at least partially includes the virtual read zone is identified.

In 520, the data of the RFID tag is read using the at least one fixed reader device.

In 525, the data of the RFID tag from the at least one fixed reader device is transmitted to the non-RFID enabled device.

In the foregoing specification, specific embodiments have been described. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of the present teachings.

The benefits, advantages, solutions to problems, and any element(s) that can cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

Moreover in this document, relational terms such as first and second, top and bottom, and the like can be used solely to distinguish one entity or action from another entity or action without necessarily requiring or implying any actual such relationship or order between such entities or actions. The terms "comprises," "comprising," "has", "having," "includes", "including," "contains", "containing" or any other variation thereof, are intended to cover a non-exclusive inclusion, such that a process, method, article, or apparatus that comprises, has, includes, or contains a list of elements does not include only those elements but may include other elements not expressly listed or inherent to such process, method, article, or apparatus. An element preceeded by "comprises a...", "has a...", "includes a...", "contains a..." does not, without more constraints, preclude the existence of additional identical elements in the process, method, article, or apparatus that comprises, has, includes, or contains the element. The terms "a" and "an" are defined as one or more unless explicitly stated otherwise herein. The terms "substantially", "essentially", "approximately", "about" or any other version thereof, are defined as being close to as understood by one of ordinary skill in the art, and in one non-limiting embodiment the term is defined to be within 10%, in another embodiment within 5%, in another embodiment within 1% and in another embodiment within 0.5%. The term "coupled" as used herein is defined as connected, although not necessarily directly and not necessarily mechanically. A device or structure that is "configured" in a certain way is configured in at least that way, but may also be configured in ways that are not listed.

It will be appreciated that some embodiments may be comprised of one or more generic or specialized processors (or "processing devices") such as microprocessors, digital signal processors, customized processors and field programmable gate arrays (FPGAs) and unique stored program instructions (including both software and firmware) that control the one or more processors to implement, in conjunction with certain non-processor circuits, some, most, or all of the functions of the method and/or apparatus described herein. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used.

Moreover, one embodiment can be implemented as a computer-readable storage medium having computer readable code stored thereon for programming a computer (e.g., comprising a processor) to perform a method as described and claimed herein. Examples of such computer-readable storage mediums include, but are not limited to, a hard disk, a CD-ROM, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory) and a Flash memory. Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

## Claims

1. A method of obtaining data of a Radio Frequency Identification (RFID) tag (110-1, 110-2, 110-3, 110-4, 110-5) in a virtual read zone (120) of a non-RFID enabled device (105), the method comprising:
determining, by a processor, a location of the non-RFID enabled device;
determining, by the processor, a virtual read zone of the non-RFID enabled device using at least the location of the non-RFID enabled device and a virtual interrogation signal strength of at least one fixed reader device (135-1, 135-2) identified as having an RFID read zone (140-1, 140-2) that at least partially includes the virtual read zone;
reading data of the RFID tag using the at least one fixed reader device; and
transmitting the data of the RFID tag from the at least one fixed reader device to the non-RFID enabled device.

2. The method of claim 1, wherein the location of the non-RFID enabled device (105) is determined using ultrasonic identification.

3. The method of claim 1, wherein the virtual read zone (120) of the non-RFID enabled device (105) is determined using an orientation of the non-RFID enabled device.

4. The method of claim 1, wherein the virtual interrogation signal strength of the at least one fixed reader device is based upon a duration in which an activation button on the non-RFID enabled device is activated.

5. The method of claim 1, further comprising:
receiving input, by a user input device, from a user relating to a shape of the virtual read zone; and
adjusting, by the processor, the virtual read zone (120) of the non-RFID enabled device based upon the input from the user.

6. The method of claim 5, wherein the shape of the virtual read zone (120) is adjusted to simulate at least one of: a zoom from a wide field to a narrow field, and a zoom out from a narrow field to a wide field.

7. The method of claim 1, further comprising:
receiving, by a user input device, input from a user requesting RFID data; and
activating, by the processor, the at least one fixed reader device subsequent to receiving the input requesting RFID data.

8. The method of claim 1, wherein reading the data of the RFID tag (110-1, 110-2, 110-3, 110-4, 110-5) comprises:
reading, by the at least one fixed reader device (135-1, 135-2), a plurality of RFID tags inside the RFID read zone (140-1, 140-2) of the at least one fixed reader device; and
determining, by the processor, that the RFID tag is inside the virtual read zone (120) of the non-RFID enabled device.

9. A system (100) for obtaining data of a Radio Frequency Identification (RFID) tag in a virtual read zone of a non-RFID enabled device, the system comprising:
a non-RFID enabled device (105);
at least one fixed RFID reader device (135-1, 135-2); and
a server (130, 200) comprising:
a processor (210) operatively coupled to the at least one fixed RFID reader device and the non-RFID enabled device; and
a memory (215) operatively coupled to the processor, wherein the memory includes computer readable program code components for:
determining a location of the non-RFID enabled device;
determining a virtual read zone of the non-RFID enabled device using at least the location of the non-RFID enabled device and a virtual interrogation signal strength of at least one fixed reader device identified as having an RFID read zone that at least partially includes the virtual read zone;
reading data of the RFID tag using the at least one fixed reader device; and
transmitting the data of the RFID tag from the at least one fixed reader device to the non-RFID enabled device.

## Patentansprüche

1. Verfahren zum Erhalten von Daten eines Hochfrequenzidentifikations(RFID)-Etiketts (110-1, 110-2, 110-3, 110-4, 110-5) in einer virtuellen Lesezone (120) eines nicht-RFID-fähigen Geräts (105), wobei das Verfahren Folgendes umfasst:
Bestimmen, durch einen Prozessor, eines Standorts des nicht-RFID-fähigen Geräts;
Bestimmen, durch den Prozessor, einer virtuellen Lesezone des nicht-RFID-fähigen Geräts mithilfe wenigstens des Standorts des nicht-RFID-fähigen Geräts und einer virtuellen Abfragesignalstärke des wenigstens einen festen Lesegeräts (135-1, 135-2), das identifiziert wurde, eine RFID-Lesezone (140-1, 140-2) aufzuweisen, die wenigstens teilweise die virtuelle Lesezone enthält;
Auslesen von Daten des RFID-Etiketts mithilfe des wenigstens einen festen Lesegeräts; und
Übertragen der Daten des RFID-Etiketts von dem wenigstens einen festen Lesegerät an das nicht-RFID-fähige Gerät.

2. Verfahren nach Anspruch 1, wobei der Standort des nicht-RFID-fähigen Geräts (105) mithilfe von Ultraschallidentifizierung bestimmt wird.

3. Verfahren nach Anspruch 1, wobei die virtuelle Lesezone (120) des nicht-RFID-fähigen Geräts (105) mithilfe einer Ausrichtung des nicht-RFID-fähigen Geräts bestimmt wird.

4. Verfahren nach Anspruch 1, wobei die virtuelle Abrufsignalstärke des wenigstens einen festen Lesegeräts auf einer Dauer, in der ein Aktivierungsschalter auf dem nicht-RFIDfähigen Gerät aktiviert wird, basiert.

5. Verfahren nach Anspruch 1, ferner Folgendes umfassend:
Empfangen einer Eingabe, durch ein Benutzereingabegerät, von einem Benutzer, welche sich auf eine Form der virtuellen Lesezone bezieht; und
Anpassen, durch den Prozessor, der virtuellen Lesezone (120) des nicht-RFID-fähigen Geräts auf Grundlage der Eingabe von dem Benutzer.

6. Verfahren nach Anspruch 5, wobei die Form der virtuellen Lesezone (120) angepasst wird, um Folgendes zu simulieren: einen Zoom von einem breiten Feld auf ein enges Feld und/oder einen Zoom aus einem engen Feld auf ein breites Feld.

7. Verfahren nach Anspruch 1, ferner Folgendes umfassend:
Empfangen, durch ein Benutzereingabegerät, einer Eingabe von einem Benutzer, welche RFID-Daten anfordert; und
Aktivieren, durch den Prozessor, des wenigstens einen festen Lesegeräts nach dem Empfangen der die RFID-Daten anfordernden Eingabe.

8. Verfahren nach Anspruch 1, wobei das Auslesen der Daten des RFID-Etiketts (110-1, 110-2, 110-3, 110-4, 110-5) Folgendes umfasst:
Auslesen, durch das wenigstens eine feste Lesegerät (135-1, 135-2), mehrerer RFID-Etiketten in der RFID-Lesezone (140-1, 140-2) des wenigstens einen festen Lesegeräts; und
Bestimmen, durch den Prozessor, dass das RFID-Etikett in der virtuellen Lesezone (120) des nicht-RFID-fähigen Geräts ist.

9. System (100) zum Erhalten von Daten eines Hochfrequenzidentifikations(RFID)-Etiketts in einer virtuellen Lesezone eines nicht-RFID-fähigen Geräts, wobei das System Folgendes umfasst:
ein nicht-RFID-fähiges Gerät (105);
wenigstens ein festes RFID-Lesegerät (135-1, 135-2); und
einen Server (130, 200), Folgendes umfassend:
einen Prozessor (210), der betriebsmäßig an das wenigstens eine feste RFID-Lesegerät und das nicht-RFID-fähige Gerät gekoppelt ist; und
einen Speicher (215), der betriebsmäßig an den Prozessor gekoppelt ist, wobei der Speicher computerlesbare Programmcodekomponenten enthält zum:
Bestimmen eines Standorts für das nicht-RFID-fähige Gerät;
Bestimmen einer virtuellen Lesezone des nicht-RFID-fähigen Geräts mithilfe wenigstens des Standorts des nicht-RFID-fähigen Geräts und einer virtuellen Abfragesignalstärke des wenigstens einen festen Lesegeräts, das identifiziert wurde, eine RFID-Lesezone aufzuweisen, die wenigstens teilweise die virtuelle Lesezone enthält;
Auslesen von Daten des RFID-Etiketts mithilfe des wenigstens einen festen Lesegeräts; und
Übertragen der Daten des RFID-Etiketts von dem wenigstens einen festen Lesegerät an das nicht-RFID-fähige Gerät.

## Revendications

1. Procédé d'obtention de données d'une étiquette d'identification par radiofréquence (RFID) (110-1, 110-2, 110-3, 110-4, 110-5) dans une zone de lecture virtuelle (120) d'un dispositif non autorisé RFID (105), le procédé comprenant :
la détermination, par un processeur, d'une localisation du dispositif non autorisé RFID ;
la détermination, par le processeur, d'une zone de lecture virtuelle du dispositif non autorisé RFID en utilisant au moins la localisation du dispositif non autorisé RFID et une intensité de signal d'interrogation virtuel d'au moins un dispositif de lecteur fixe (135-1, 135-2) identifié comme ayant une zone de lecture RFID (140-1, 140-2) qui inclut au moins partiellement la zone de lecture virtuelle ;
la lecture de données de l'étiquette RFID en utilisant le au moins un dispositif de lecteur fixe ; et
la transmission des données de l'étiquette RFID du au moins un dispositif de lecteur fixe au dispositif non autorisé RFID.

2. Procédé selon la revendication 1, dans lequel la localisation du dispositif non autorisé RFID (105) est déterminée en utilisant l'identification ultrasonique.

3. Procédé selon la revendication 1, dans lequel la zone de lecture virtuelle (120) du dispositif non autorisé RFID (105) est déterminée en utilisant une orientation du dispositif non autorisé RFID.

4. Procédé selon la revendication 1, dans lequel l'intensité de signal d'interrogation virtuel du au moins un dispositif de lecteur fixe est basée sur une durée pendant laquelle un bouton d'activation sur le dispositif non autorisé RFID est activé.

5. Procédé selon la revendication 1, comprenant en outre :
la réception d'une entrée, par un dispositif d'entrée d'utilisateur, en provenance d'un utilisateur relative à une forme de la zone de lecture virtuelle ; et
l'ajustement, par le processeur, de la zone de lecture virtuelle (120) du dispositif non autorisé RFID sur la base de l'entrée en provenance de l'utilisateur.

6. Procédé selon la revendication 5, dans lequel la forme de la zone de lecture virtuelle (120) est ajustée pour simuler au moins un parmi : un zoom d'un champ large à un champ étroit, et un zoom arrière d'un champ étroit à un champ large.

7. Procédé selon la revendication 1, comprenant en outre :
la réception, par un dispositif d'entrée d'utilisateur, d'une entrée en provenance d'un utilisateur demandant des données RFID ; et
l'activation, par le processeur, du au moins un dispositif de lecteur fixe à la suite de la réception de l'entrée demandant des données RFID.

8. Procédé selon la revendication 1, dans lequel la lecture des données de l'étiquette RFID (110-1, 110-2, 110-3, 110-4, 110-5) comprend :
la lecture, par le au moins un dispositif de lecteur fixe (135-1, 135-2), d'une pluralité d'étiquettes RFID à l'intérieur de la zone de lecture RFID (140-1, 140-2) du au moins un dispositif de lecteur fixe ; et
la détermination, par le processeur, que l'étiquette RFID est à l'intérieur de la zone de lecture virtuelle (120) du dispositif non autorisé RFID.

9. Système (100) pour obtenir des données d'une étiquette d'identification par radiofréquence (RFID) dans une zone de lecture virtuelle d'un dispositif non autorisé RFID, le système comprenant :
un dispositif non autorisé RFID (105) ;
au moins un dispositif de lecteur RFID fixe (135-1, 135-2) ; et
un serveur (130, 200) comprenant :
un processeur (210) couplé fonctionnellement au au moins un dispositif de lecteur RFID fixe et au dispositif non autorisé RFID ; et
une mémoire (215) couplée fonctionnellement au processeur, où la mémoire inclut des composants de code de programme lisibles par ordinateur pour :
déterminer une localisation du dispositif non autorisé RFID ;
déterminer une zone de lecture virtuelle du dispositif non autorisé RFID en utilisant au moins la localisation du dispositif non autorisé RFID et une intensité de signal d'interrogation virtuel d'au moins un dispositif de lecteur fixe identifié comme ayant une zone de lecture RFID qui inclut au moins partiellement la zone de lecture virtuelle ;
lire des données de l'étiquette RFID en utilisant le au moins un dispositif de lecteur fixe ; et
transmettre les données de l'étiquette RFID du au moins un dispositif de lecteur fixe au dispositif non autorisé RFID.
